# EUROPEAN PATENT APPLICATION

(11) **EP 3 021 183 A1**
(43) Date of publication of application: **18.05.2016**
(21) Application number: 15194491.5
(22) Date of filing: 13.11.2015
(51) Int. Cl.: G05B 19/404, B23Q 17/22

(54) **METHOD AND DEVICE FOR AUTOMATICALLY SETTING TOOL CORRECTION VALUE OF MACHINE TOOL**

(30) Priority: 14.11.2014 JP 2014231892
(71) Applicant: Nakamura-Tome Precision Industry Co., Ltd., Hakusan-shi, Ishikawa (JP)
(72) Inventor: NISHIMURA, Naotsugu, Hakusan-shi, Ishikawa 000-000 (JP)
(74) Representative: Isarpatent

(57) **Abstract**

[Problem] Provided is a technique capable of automatically setting a tool correction value for a plurality of tools attached to a tool post of a NC machine tool (a relative positional relation between a tool post and a cutting edge of the tool).

[Solving Means] An image (A) of a tool (2) attached to a tool post (15) is acquired by a camera (4) installed inside a machine tool, the position and the direction of a cutting edge (24) of the tool (2) on the image are obtained, and a tool correction value is automatically set in a controller while being obtained from a positional relation between the installation position of the camera (4) and the position of the tool post (15) when the image is acquired. The tool correction value set by the controller (5) can be measured by a tool setter (21). In this case, a false tool correction value is obtained from the image, the cutting edge (24) of the tool is detected by a detection sensor (23) of the tool setter (21), and a correction value setting program (53) registered in the controller (5) is automatically executed.

## Description

### TECHNICAL FIELD

The present invention relates to a method and a device for automatically setting a relative positional relation between a tool post of a NC machine tool and a cutting edge of a tool attached to the tool post.

### BACKGROUND ART

A processing shape of a work (a processing object) processed by a machine tool is determined by a method of moving a cutting edge of a tool with respect to the work. Meanwhile, a relative positional relation between the work and a tool post equipped with the tool is controlled by a controller of the machine tool.

Various tools are attached to the tool post in response to a processing type. Since the length and the direction from the tool post to the cutting edge are different depending on the tool, a desired processing operation cannot be performed unless a positional relation between the cutting edge and a reference position (a positioned recognized or controlled by a controller) of the tool post is registered in the controller in advance. Here, when the tool is installed in the tool post, a position (also referred to as a tool correction value or a tool offset value) of the cutting edge based on the reference position of the tool post is set to the controller.

Generally, a tool correction value is set in a manner such that a tool is attached to a tool post, a tool setter having a detection sensor such as a proximity switch or a touch sensor detecting a cutting edge of the tool is installed at a predetermined position, the tool post is moved so as to detect the cutting edge by the detection sensor, and the tool correction value is obtained based on a position (a position recognized by a controller) of the tool post when the detection signal is received.

In the related art, an operation of detecting the cutting edge by the detection sensor is manually performed by an operator through an operation panel. That is, a tool as a target is selected, the tool post is manually moved to a position where the cutting edge is detected by the detection sensor, and the tool correction value is set in the controller when the detection signal is output from the detection sensor. In this way, these operations are repeated so as to set the tool correction values for a plurality of tools attached to the tool post.

In consideration of the time taken for the setting of the tool correction value by such manual operations, Patent Document 1 discloses a technique of automatically measuring and setting the length of a drill attached to a chuck of a tool spindle of a drill machine. Further, Patent Document 2 discloses a technique of obtaining a tool diameter of a rotation tool from an image of the tool captured by a camera. Furthermore, Patent Document 3 discloses a technique of obtaining a tool correction value from an image acquired by a camera.

### CITATION LIST

### PATENT DOCUMENT

Patent Document 1: JP 7-276122 A
Patent Document 2: JP 2000-24880 A
Patent Document 3: JP 5-200654 A

### DISCLOSURE OF THE INVENTION

### PROBLEM TO BE SOLVED BY THE INVENTION

In a machine tool such as a turret lathe that performs a processing operation by using a plurality of tools, eight to twelve tools are attached to one tool post (turret), and two tools having different cutting edge directions are attached to one tool attachment position (tool station). As a result, a problem arises in that a great effort and time are taken for an operation in which a tool correction value for each tool is manually set in the controller.

Further, in a lathe with a plurality of turrets or a complex lathe with a tool exchanging unit, there are many types of tools used for the processing operation, and the position or the direction of the cutting edge is different as well as the length to the cutting edge from the tool post. Further, since these tools are attached to the turret through the tool holder, the tool correction value is changed even in the same tool in accordance with the shape or the dimension of the tool holder to be used.

Accordingly, the approaching direction of the cutting edge with respect to the detection sensor of the tool setter becomes different in accordance with the type of the tool attached to the tool post. And a lot of tools have to approach to the detection sensor from a plurality of directions to set the tool correction values.

An object of the invention is to provide a technique capable of automatically setting a tool correction value of each of a plurality of tools attached to a tool post by solving the above-described problems in the turret lathe or the machine tool with the tool exchanging unit.

### MEANS FOR SOLVING PROBLEM

In the invention, an image A of a tool 2 attached to a tool post 15 is acquired by a camera 4 installed inside a machine tool, the position and the direction of a cutting edge 24 of the tool 2 on the image are obtained from the image A, and a tool correction value as a relative positional relation between the position of the cutting edge 24 of the tool on the image A and a reference position o of the tool post 15 is obtained from a positional relation between the installation position of the camera 4 and the position of the tool post 15 when the image is acquired. And the tool correction value is automatically set in the controller.

The tool correction value set in the controller 5 can be accurately measured by the tool setter 21. In this case, a false tool correction value is obtained from the image of the tool 2 acquired by the camera 4, the cutting edge 24 is detected by the detection sensor 23 of the tool setter 21 based on the false tool correction value, and a correction value setting program 53 registered in the controller 5 is automatically executed so as to set a correct tool correction value. The correction value setting program is used to move the tool post 15 to the cutting edge detection start point s at a high speed, to move the tool post to the detection sensor 23 at a low speed from a direction corresponding to the cutting edge direction, and to retract the tool post at a high speed when a detection signal is received. Then, when the next movement axis is designated, the movement in the next movement axis direction is repeated.

When a detection signal is output from the detection sensor 23 during the repeated operation, a tool correction value in the movement direction at that time is calculated from the coordinate of the tool post 15, and is automatically set in the controller 5.

The device for automatically setting the tool correction value of the invention includes the camera 4 that is installed inside a machine tool 1, a tool image acquiring unit 51 that acquires the image A of the tool 2 attached to the tool post 15 by the camera 4, an image analyzing unit 52 that acquires the position and the direction of the cutting edge 24 from the tool image A acquired by the camera 4, and a correction value setting program 53 that sets a tool correction value in the controller 5 based on the position and the direction of the cutting edge 24 acquired by the image analyzing unit 52.

When the cutting edge 24 is detected by the tool setter 21 so as to set the tool correction value, the correction value setting program 53 is used to move the tool post 15 at a high speed toward the detection sensor 23 of the tool setter 21, to move the tool post 15 toward the detection sensor 23 at a low speed, to stop the low-speed movement and acquire the coordinate of the tool post 15 when the detection sensor 23 outputs a detection signal, to calculate a tool correction value based on the acquired coordinate and the position of the detection sensor 23, and to store the calculated tool correction value in a correction value memory 54 corresponding to the number of the tool station equipped with the tool.

In the case of setting the correction value for the tools attached to the turret, after a correction value setting operation is performed for the first tool in the all necessary axis directions, the correction value setting program moves the tool post to a turret indexing position at a high speed along the retracting track, indexes the next tool at the position, and repeats the above-described operations for the next tool.

When the cutting edge circle and the cutting edge direction of the tool and the image data of the tool are registered in advance in the controller 5 for various tools, the cutting edge circle and the cutting edge direction of the tool can be acquired by comparing the registered image data and the image data of the tool 2 acquired by the camera 4, and hence the correction value setting program can set the tool correction value by using the acquired cutting edge circle and the acquired cutting edge direction.

Further, the tool correction value can be directly acquired by the image analysis using a high-resolution camera or a zoom function of a camera for obtaining an enlarged image of the cutting edge.

### EFFECT OF THE INVENTION

In the invention, since the tool correction value setting operation is automatically performed based on the tool image captured by the camera, the operator may attach a necessary tool to a turret tool post or a tool magazine. Accordingly, since the tool correction value is automatically set for the tools, the work burden on the operator is solved, and hence an erroneous operation or an erroneous input can be also prevented.

Even in the tool correction value setting operation using the tool setter for the tools attached to the tool post, the cutting edge can be automatically moved to the detection sensor, the cutting edge can automatically contact the detection sensor corresponding to each tool, and the tool correction value can be automatically set or updated in the necessary axis direction (the X-axis direction and/or the Z-axis direction in the lathe) of each tool. Accordingly, since the tool correction value setting operation is simply and easily performed for the machine tool such as the turret lathe using a plurality of tools, the erroneous operation of the operator can be also prevented.

### BRIEF DESCRIPTION OF DRAWINGS

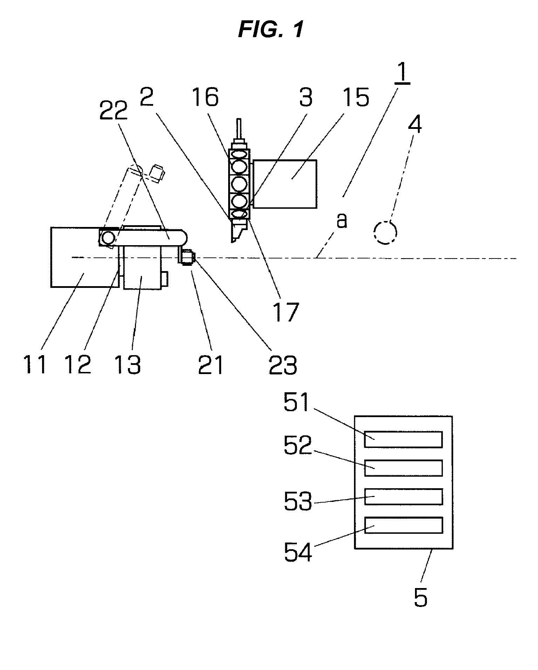

FIG. 1 is a schematic diagram illustrating a main part of a turret lathe;
FIG. 2 is a diagram illustrating a cutting edge direction and a cutting edge correction number;
FIG. 3 is a diagram illustrating an example of a method of detecting a cutting edge position and a cutting edge direction;
FIG. 4 is a diagram illustrating an example of a method of detecting a cutting edge circle;
FIG. 5 is diagram illustrating an example of a method of removing a background image;
FIG. 6 is a diagram illustrating a first example of a cutting edge detecting operation;
FIG. 7 is a diagram illustrating a second example of the cutting edge detecting operation;
FIG. 8 is a diagram illustrating a third example of the cutting edge detecting operation;
FIG. 9 is a diagram illustrating a fourth example of the cutting edge detecting operation; and
FIG. 10 is a flowchart illustrating an example of a cutting edge setting procedure using a tool setter.

### MODE FOR CARRYING OUT THE INVENTION

Hereinafter, an embodiment of the invention will be described by exemplifying a NC turret lathe with a basic structure. The NC turret lathe includes a machine body 1 and a controller 5. The machine body 1 includes a spindle 12 journaled to a headstock 11 fixed to a bed and a tool post 15. A chuck 13 which holds a work is attached to the front end of the spindle 12. The tool post 15 is a turret tool post with a turret 16. A plurality of tools 2 is attached to the turret 16 through a holder 3. The tool post 15 is positioned so as to be movable in the Z-axis direction as the direction of the spindle axis a and the X-axis direction as the direction orthogonal thereto and movable close to and away from the spindle axis a in accordance with the instruction from the controller 5.

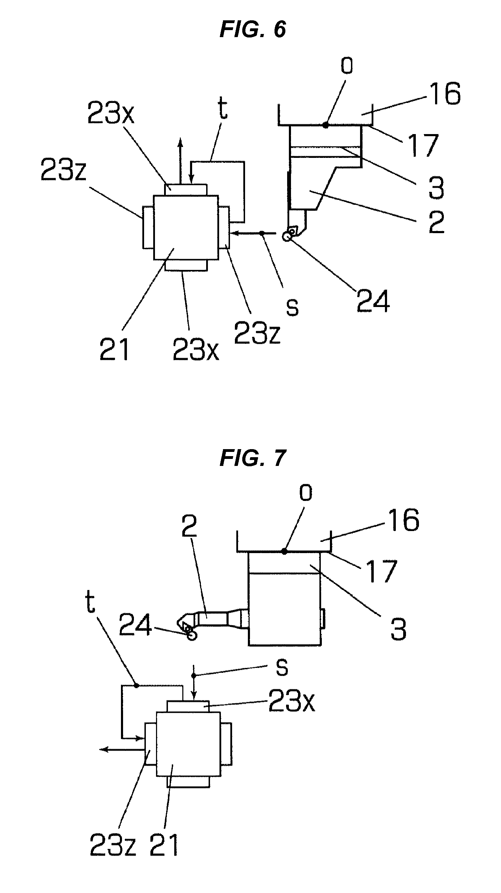

A tool setter 21 and a forward/backward moving unit 22 are attached to the headstock 11. As illustrated in FIGS. 6 to 9, the tool setter 21 includes detection sensors 23 (23z and 23x) provided at both sides of the Z-axis direction and the X-axis direction at the forward movement position. These detection sensors 23 are accurately positioned to fixed positions on the spindle axis a during the forward movement.

A camera 4 directed toward the optical axis orthogonal to the moving plane (the Z-X plane) is provided above the moving area of the tool post 15. In order to prevent a cutting liquid or cut chips scattered during a work processing operation from adhering to the camera, the camera 4 is provided with a cover which is opened during an imaging operation or a retracting unit which retracts the camera to the outside of the processing area during a work processing operation. During the imaging operation, the camera 4 is positioned to an accurate position above the Z-X plane at the same precision as the position of the tool post 15.

The controller 5 includes an image acquiring unit 51, an image analyzing unit 52, a correction value setting program 53, and a correction value memory 54.

When the registration of the tool correction value of a tool station 17 of the turret 16 is instructed, the image acquiring unit 51 directs the tool station 17 toward the spindle axis a, moves the tool post 15 to a position where the tool 2 attached to the tool station 17 enters the imaging area of the camera 4, and performs an imaging operation by the camera 4 so as to acquire an image.

The image analyzing unit 52 acquires the position and the direction of the cutting edge 24 of the tool 2 attached to the tool station 17 directed toward the spindle axis a from the image acquired by the image acquiring unit.

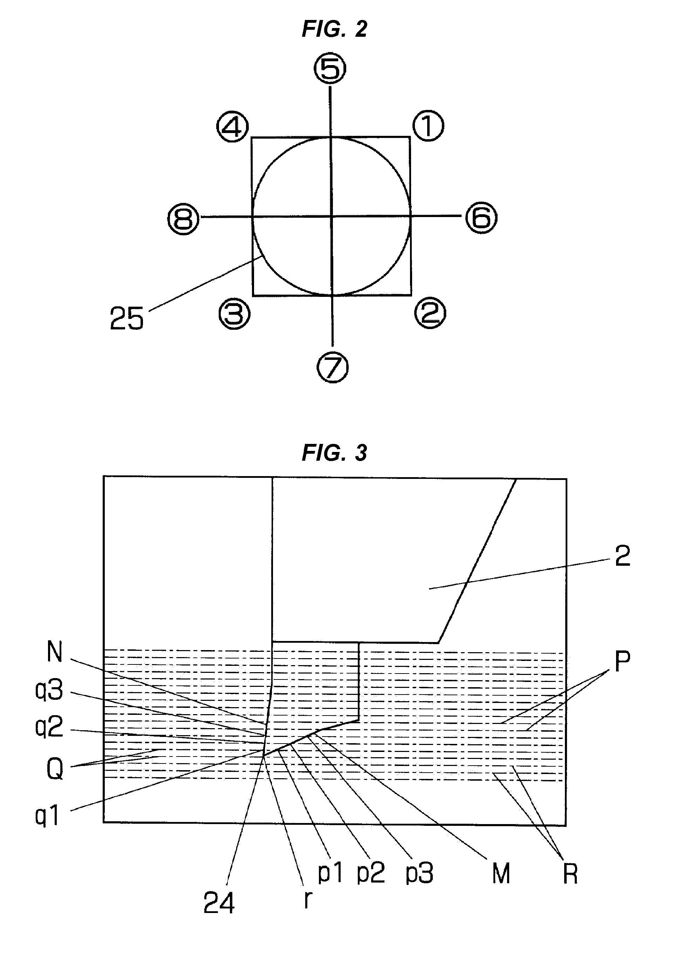

Specifically, for example, an image illustrated in FIG. 3 obtained by capturing the tool is scanned by a scanning line R in the X-axis direction while a value X is increased (in a direction moving away from the spindle axis a), a point r in which the tool 2 is first detected is set as a false cutting edge position, and the image is scanned by scanning lines P and Q from the +Z side and -Z side while the value X is further increased. Then, a least-squares method is applied to the coordinates of the tool detection positions p1, p2, p3 ... and the tool detection positions q1, q2, q3 ... so as to obtain an equation for two lines M and N interposing the cutting edge, and the direction of a bisector L is set as the cutting edge direction. The acquired false cutting edge position is a value (a vectorial sum) obtained by adding the coordinate of the cutting edge on the image and the distance between the optical axis of the camera and the reference position of the tool post (generally, the center of the tool station directed toward the spindle axis a) during the image acquiring operation.

The cutting edge 24 of the tool has a small circular arc (a cutting edge circle 25). By the cutting edge direction, a circular arc in a certain direction of the cutting edge circle is set as a reference arc. For example, as illustrated in FIG. 2, a certain controller divides the cutting edge circle 25 into the cut directions of 45 degree, gives a number (a cutting edge correction number) thereto, and set the cutting edge direction by the number. For example, if the cutting edge direction is set as the number 3 of FIG. 2, a tool correction value is set by moving the cutting edge to contact the detection sensors from the X-axis direction and the Z-axis direction in a direction indicated by the arrow of the track t of FIG. 6 when the tool correction value is set. Accordingly, such a controller determines a cutting edge correction number by the detected cutting edge direction.

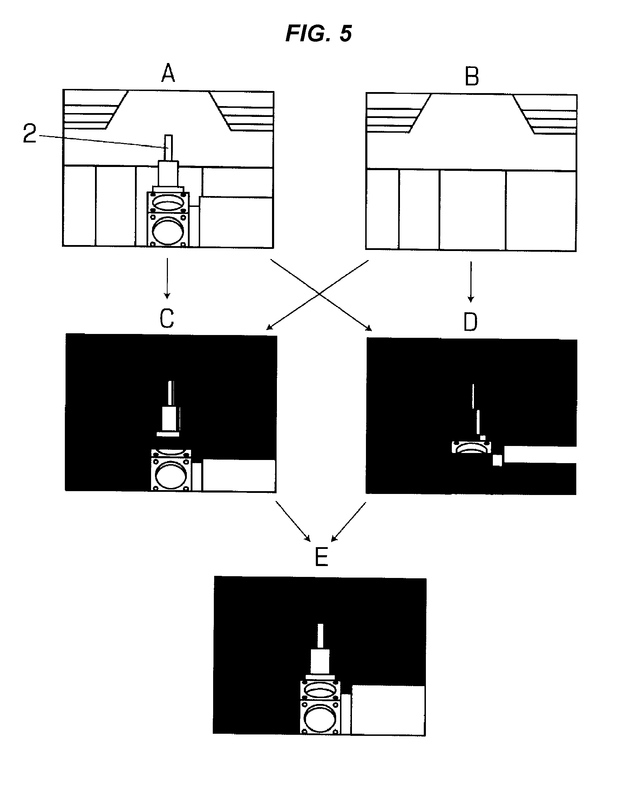

In the image of the camera 4, an image of the bed and the other portions having metallic luster similar to the tool 2 and the tool post 15 is included as a background image. In order to detect the cutting edge 24 of the tool, the background image needs to be removed. The background image can be effectively removed by a method of moving the tool post 15 equipped with the tool 2 into and out of the imaging area of the camera 4, capturing an image A including the tool 2 illustrated in FIG. 5 and an image B not including the tool 2, and obtaining a difference between both images so as to create an image E which includes the tool post and the tool and from which the background image is removed.

That is, a difference image C is obtained by removing the luminance of the image B from the luminance of the image A, and a difference image D is obtained by removing the luminance of the image A from the luminance of the image B, a synthesized image E is created by synthesizing both difference images C and D while a background image is removed, and the shape of the tool 2 is extracted from the synthesized image E. Accordingly, it is possible to obtain an image in which a tool shape can be accurately recognized without using a background plate or a background cloth for removing a background image.

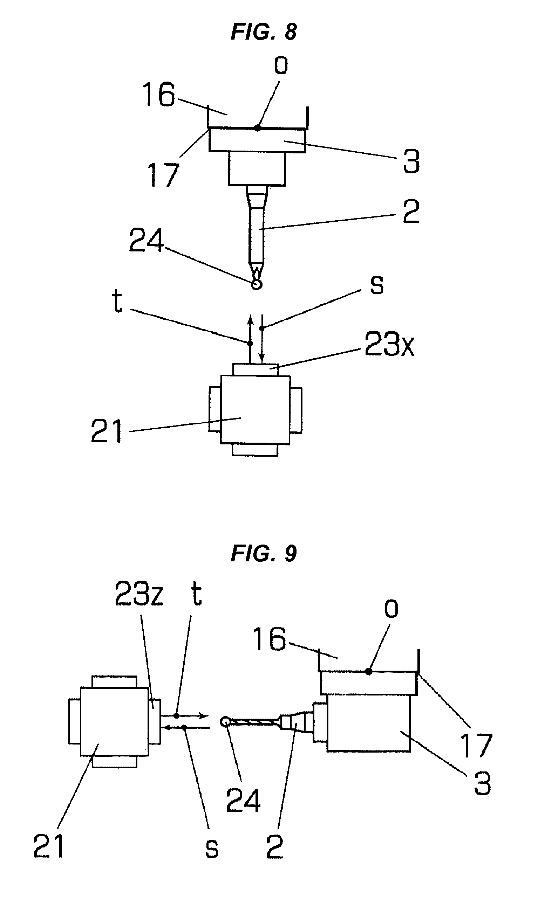

The correction value setting program 53 causes the controller 5 to set a tool correction value in a manner such that the detection sensor 23 of the tool setter detects the cutting edge by using the false tool correction value. The correction value setting program 53 moves the tool post 15 according to, for example, a track t illustrated in FIGS. 6 to 9 in accordance with the cutting edge direction acquired by the image analyzing unit. FIG. 6 is an example of the movement track in the case of the tool in which the cutting edge correction number of FIG. 2 is 3, FIG. 7 is an example of the movement track in the case of the tool in which the cutting edge correction number is 2, FIG. 8 is an example of the movement track in the case of the tool in which the cutting edge correction number is 5, and FIG. 9 is an example of the movement track in the case of the tool in which the cutting edge correction number is 7.

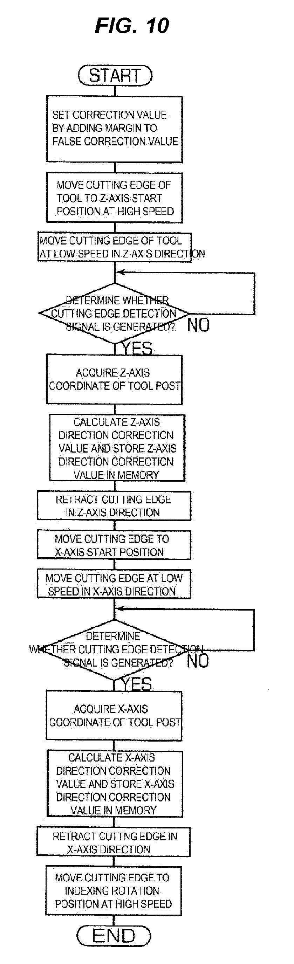

FIG. 10 is a flowchart illustrating a procedure of the correction value setting program 53 in the case of the tool in which the cutting edge correction number (the cutting edge direction) is 3 in FIG. 2.

When the cutting edge of the tool 2 is detected by the detection sensor 23 of the tool setter 21, the cutting edge needs to be positioned within an area of about 1 mm by 1 mm as the detection area of the detection sensor. Further, if the tool post is not immediately stopped when the cutting edge contacts the detection sensor, the detection sensor is damaged. For that reason, when the cutting edge contacts the detection sensor, the tool moves at a high speed to a position s nearby the detection sensor (separated from the detection sensor by about 1 mm) (see FIGS. 6 to 9), and the tool post moves at a low speed in the Z-axis direction or the X-axis direction so that the tool post can be immediately stopped.

The false correction value acquired by the image analysis is used to move the tool nearby the detection sensor 23 at a high speed. Specifically, an allowable margin for preventing the collision is added to the false correction value and the tool post 15 moves at a high speed to a position in which the false cutting edge is in contacts with the detection sensor 23 (the actual cutting edge moves to the position s of FIG. 6), and then moves at a low speed. When the detection sensor 23 outputs a detection signal during the low-speed movement, the movement of the tool post 15 is stopped, and the coordinate of the tool post is read out. Then, the tool correction value is calculated from the coordinate of the tool post and the coordinate of the detection sensor 23, and is set in a correction value memory 54 of the controller. In the case of the tool in which the tool correction number is 3, the tool correction value in the Z-axis direction is set, and the tool correction value in the X-axis direction is set after the movement toward the sign t of FIG. 6.

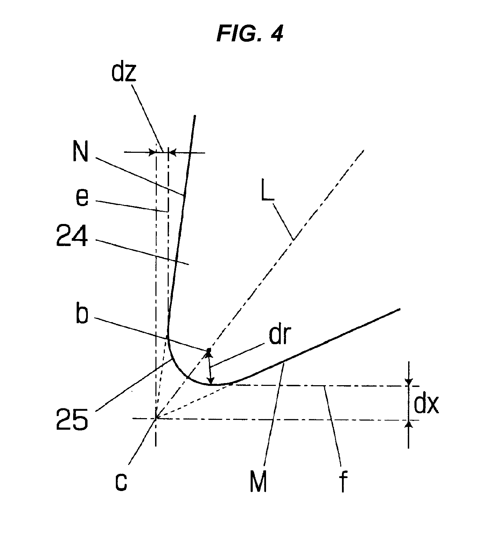

If necessary, the radius of the cutting edge circle is obtained by a geometric calculation from the cutting edge position detected by the tool setter 21 and the false cutting edge position acquired by the image analyzing unit. For example, as illustrated in FIG. 4, the equation for two lines M and N interposing the cutting edge is obtained as described above, and the coordinate of the intersection point c of the lines M and N obtained again by excluding a detection points largely deviated from the equation obtained to remove a deviation caused by the detection error of the edge of the tool or the cutting edge circle is obtained. Then, the center b and the radius dr of the cutting edge circle 25 can be obtained from a relation in which a value obtained by adding the radius dr of the cutting edge circle to the difference dz and dx between the intersection point c and the position of the actual cutting edge detected by the tool setter becomes a difference between the coordinate of the intersection point c and the coordinate of the center b of the cutting edge circle and the center b of the cutting edge circle exists on the bisector L.

Further, the radius of the cutting edge circle and the tool correction value in each axis direction can be obtained by detecting the tangent lines e and f in the Z-axis direction and the X-axis direction and the circular-arc of the cutting edge circle 25 by the image analyzing unit 52 through the repeated operations for the tool post correction movement and the cutting edge position detecting operation using a high-resolution camera or a zoom function of a camera for obtaining an enlarged image of the cutting edge.

When a general camera installed inside the machine tool is used, the false tool correction value can be set with an error of about 0.5 mm, and hence the cutting edge of the tool 2 can safely and automatically contact the tool setter 21. According to the invention, since the entire processes, that is, from the process of acquiring the tool shape to the process of setting the tool correction value are automatically performed, the work burden on the operator can be greatly reduced, and the skill of the operator is not needed. Thus, there is no need to worry the damage of the machine tool caused by an erroneous input.

In the above-described embodiment, the cutting edge direction and the cutting edge circle is obtained by analyzing the image acquired by the camera 4. However, when the image data for various tools and the cutting edge circle and the tool correction number of each tool are registered in the controller in advance, the cutting edge circle and the cutting edge direction are determined by comparing the image data of the registration and the image data acquired by the camera, and the tool correction value is set by the correction value setting program based on the cutting edge circle and the cutting edge direction.

### EXPLANATIONS OF LETTERS OR NUMERALS

- 1: MACHINE TOOL
- 2: TOOL
- 4: CAMERA
- 5: CONTROLLER
- 15: TOOL POST
- 21: TOOL SETTER
- 23: DETECTION SENSOR
- 24: CUTTING EDGE OF TOOL
- 51: TOOL IMAGE ACQUIRING UNIT
- 52: IMAGE ANALYZING UNIT
- 53: CORRECTION VALUE SETTING PROGRAM
- 54: CORRECTION VALUE MEMORY
- A: TOOL IMAGE
- O: REFERENCE POSITION
- s: CUTTING EDGE DETECTION START POINT

## Claims

1. A device for automatically setting a tool correction value of a machine tool comprising:
a camera that is installed inside the machine tool;
a tool image acquiring unit that acquires an image of a tool attached to a tool post by the camera;
an image analyzing unit that acquires the position and the direction of a cutting edge of the tool from the tool image acquired by the camera; and
a correction value setting program that causes a controller to set a relative positional relation between a reference position of the tool post and the cutting edge of the tool based on the position and the direction of the cutting edge acquired by the image analyzing unit.

2. The device for automatically setting a tool correction value of a machine tool according to claim 1, further comprising:
a tool setter that includes a detection sensor detecting the cutting edge of the tool attached to the tool post; and
a forward/backward moving unit that moves the tool setter between a retracting position and an advancing position inside a moving area of the cutting edge of the tool,
wherein the correction value setting program is used to move the tool post toward the tool setter at a high speed, to move the tool post toward the detection sensor of the tool setter at a low speed, to acquire the coordinate of the tool post by stopping the low-speed movement when the detection sensor outputs a detection signal, to calculate a tool correction value based on a positional relation between the acquired coordinate and the detection sensor, and to store the calculated tool correction value in a tool correction value storage area corresponding to the number of a tool station equipped with the tool.

3. The device for automatically setting a tool correction value of a machine tool according to claim 1, further comprising:
the image analyzing unit that acquires a cutting edge circle of the tool from the tool image acquired by the camera,
wherein the correction value setting program is used to calculate a tool correction value from the cutting edge circle and the position and the direction of the cutting edge acquired by the image analyzing unit and to store the calculated tool correction value in a tool correction value storage area corresponding to the number of a tool station equipped with the tool.

4. A device for automatically setting a tool correction value of a machine tool comprising:
a plurality of types of tools that is sorted based on a tool shape having a cutting edge direction; and
a correction value setting program that is registered for each tool type,
wherein an image analyzing unit determines the type of the tool by comparing an image of the tool acquired by a camera with a tool shape of a registered tool type and executes the correction value setting program registered in response to the determined tool type.

5. The device for automatically setting a tool correction value of a machine tool according to any one of claims 1 to 4,
wherein the image acquiring unit causes the camera to capture an image including the tool and an image not including the tool at the same position and acquires an image obtained by synthesizing both difference images.

6. A method of automatically setting a tool correction value of a machine tool comprising:
installing a camera inside the machine tool;
acquiring an image of a tool attached to a tool post by the camera;
acquiring the position and the direction of a cutting edge of the tool from the tool image acquired by the camera;
calculating a relative positional relation between the cutting edge of the tool and a reference position of the tool post based on the acquired position and the acquired direction of the cutting edge; and
setting the calculated relative positional relation as a tool correction value to a controller.
